# EUROPEAN PATENT APPLICATION

(11) **EP 4 836 131 A1**
(43) Date of publication of application: **04.11.2026**
(21) Application number: 24824738.9
(22) Date of filing: 31.05.2024
(51) Int. Cl.: H01M 50/244, H01M 50/296, H01R 4/64, H01R 4/30

(54) **ENERGY STORAGE DEVICE AND HOUSING THEREOF**

(30) Priority: 28.12.2023 CN 202311829638
(71) Applicant: SHENZHEN POWEROAK NEWENER CO., LTD., Shenzhen, Guangdong 518051 (CN)
(72) Inventor: YOU, Yongliang, Shenzhen Guangdong 518051 (CN); QIN, Geng, Shenzhen Guangdong 518051 (CN); GUO, Huisheng, Shenzhen Guangdong 518051 (CN); ZENG, Huaquan, Shenzhen Guangdong 518051 (CN)
(74) Representative: Balder IP Law, S.L.
(86) International application number: PCT/CN2024/096727
(87) International publication number: WO 2025/138584

(57) **Abstract**

The present application relates to an energy storage device and a housing thereof. The housing of the energy storage device includes a housing body (10), a grounding adapter assembly (20), and a grounding connection member (30). A grounding portion of a battery pack is electrically connected to a second docking member (23) through the grounding connection member (30), and a first docking member (22) of the grounding adapter assembly (20) is connected to a grounding network outside the housing body (10) to achieve grounding of the battery pack. During assembly, a first fastener (40) extends through the adapter body (21) and is correspondingly connected to the supporting portion (13), so that the grounding adapter assembly (20) is connected to the inner wall of the housing body (10), the first docking member (22) is provided in the through hole (11), and the first docking member (22) is connected to the grounding network. The grounding adapter assembly (20) has a simpler structure and is convenient to produce and assemble, so that the cost is reduced, and a size of the grounding adapter assembly (20) can be be made smaller, which occupies less space.

## Description

This application claims priority to Chinese Patent Application No. 202311829638.1, filed on December 28, 2023, entitled ENERGY STORAGE DEVICE AND HOUSING THEREOF", the entire content of which is incorporated herein by reference in its entirety.

### TECHNICAL FIELD

The present application relates to the technical field of batteries, in particular to an energy storage device and a housing thereof.

### BACKGROUND

The energy storage device in the related art includes a housing made of an insulating material and a battery pack provided in the housing. In order to improve safety and avoid leakage of electricity in the housing, it is proposed to provide a grounding member on the housing, and the grounding member is electrically connected to a first butting member of the battery pack and a grounding network outside the housing through wires respectively to form a circuit. However, the grounding member in the related art is usually a component processed by a lathe and fixed on the housing by injection molding. The structural design of the grounding member is relatively complex, which is not only unfavorable for automatic production, but also has high cost and occupies a large space.

### SUMMARY

According to various embodiments of the present application, the present application provides an energy storage device and a housing thereof.

A housing of an energy storage device, the housing includes:
a housing body provided with a through hole, wherein an inner wall of the housing body is provided with at least one supporting portion;
a grounding adapter assembly fixedly connected to the inner wall of the housing body, wherein the grounding adapter assembly includes an adapter body connected to the inner wall of the housing body and a first docking member and a second docking member that are connected to the adapter body, the first docking member is provided in the through hole;
at least one first fastener, wherein the first fastener extends through the adapter body; and
a grounding connection member, wherein the grounding connection member is provided with a joint connected to the second docking member, the grounding connection member is configured to be electrically connected to a grounding portion of a battery pack.

In one of the embodiments, the inner wall of the shell body is provided with a first protrusion, the first protrusion is provided with a first avoidance hole in communication with the through hole, the adapter body is in close contact with the first protrusion, and the first docking member is further provided in the first avoidance hole.

In one of the embodiments, at least two supporting portions are provided, at least two first fasteners are provided, and each first fastener is provided corresponding to each supporting portion; and/or the adapter body includes a flat plate, and the first fastener and the first docking member are both mounted on the flat plate.

In one of the embodiments, the adapter body includes a first adapter plate and a second adapter plate that form an angle and are connected to each other, the first adapter plate abuts against the supporting portion, the first fastener extends through the first adapter plate and is correspondingly connected to the supporting portion, the second adapter plate abuts against the supporting portion and forms a gap space with the inner wall of the housing body, and the first docking member is provided on the second adapter plate.

In one of the embodiments, the supporting portion is configured as a supporting column or a supporting block, two supporting portions are provided, and the two supporting portions are respectively located on opposite sides of the through hole.

In one of the embodiments, the supporting portion and/or the inner wall of the housing body is provided with an engagement portion, and a side portion of the second adapter plate away from the first adapter plate is engaged with and fixed to the engagement portion.

In one of the embodiments, the housing body includes a first housing wall, and a second housing wall connected to the first housing wall and forming an angle with the first housing wall, the through hole is formed on the first housing wall, and the supporting portion is connected to the second housing wall.

In one of the embodiments, the first housing wall is a side wall of the housing body, the second housing wall is a bottom wall of the housing body, and the second docking member is provided on the first adapter plate.

In one of the embodiments, the joint is provided with a first mounting hole, and the second docking member is provided with a second mounting hole corresponding to the first mounting hole, the housing of the energy storage device further includes a second fastener, and the joint is fixedly mounted on the second docking member through the second fastener extending through the first mounting hole and the second mounting hole sequentially;
the inner wall of the shell body is provided with a second protrusion, the second protrusion is provided with a second avoidance hole corresponding to the second docking member, the adapter body is in close contact with the second protrusion, and the second docking member is further provided in the second avoidance hole.

An energy storage device includes the housing of the energy storage device and a battery pack, the battery pack is provided in the housing, and a grounding portion of the battery pack is electrically connected to the grounding connection member.

The details of one or more embodiments of the application are set forth in the accompanying drawings and the description below. Other features, objects, and advantages of the application will be apparent from the description and drawings, and from the claims.

### BRIEF DESCRIPTION OF THE DRAWINGS

FIG. 1 is a schematic view of a housing of an energy storage device according to an embodiment of the present application.
FIG. 2 is an exploded view of the structure shown in FIG. 1.
FIG. 3 is a sectional view of the structure shown in FIG. 1.
FIG. 4 is an enlarged view of a portion A of FIG. 3.
FIG. 5 is a schematic view of the structure shown in FIG. 1 viewed from another aspect.
FIG. 6 is a schematic view of a grounding adapter assembly according to another embodiment of the present application.
FIG. 7 is a schematic view of the housing of the energy storage device according to another embodiment of the present application.
FIG. 8 is an exploded view of the structure shown in FIG. 7.
FIG. 9 is a sectional view of the structure shown in FIG. 6.
FIG. 10 is an enlarged view of a portion B of FIG. 9.
FIG. 11 is a schematic view of the structure shown in FIG. 6 viewed from another aspect.
FIG. 12 is a schematic view of the grounding adapter assembly according to another embodiment of the present application.
10. Housing body; 11. Through hole; 12. First protrusion; 121. First avoidance hole; 13. Supporting portion; 14. Engagement portion; 15. First housing wall; 16. Second housing wall; 17. Second protrusion; 171. Second avoidance hole; 20. Grounding adapter assembly; 21. Adapter body; 211. Penetration hole; 212. Flat plate; 213. First adapter plate; 214. Second adapter plate; 22. First docking member; 23. Second docking member; 231. Second mounting hole; 30. Grounding connection member; 31. Joint; 311. First mounting hole; 40. First fastener; 50. Second fastener.

### DETAILED DESCRIPTION OF THE EMBODIMENTS

In order to make the above objects, features and advantages of the present application clear and easier to understand, the specific embodiments of the present application are described in detail below in combination with the accompanying drawings. Many specific details are set forth in the following description to facilitate a full understanding of the present application. However, the present application can be implemented in many ways different from those described herein, and those skilled in the art can make similar improvements without departing from the connotation of the present application. Therefore, the present application is not limited by the specific embodiments disclosed below.

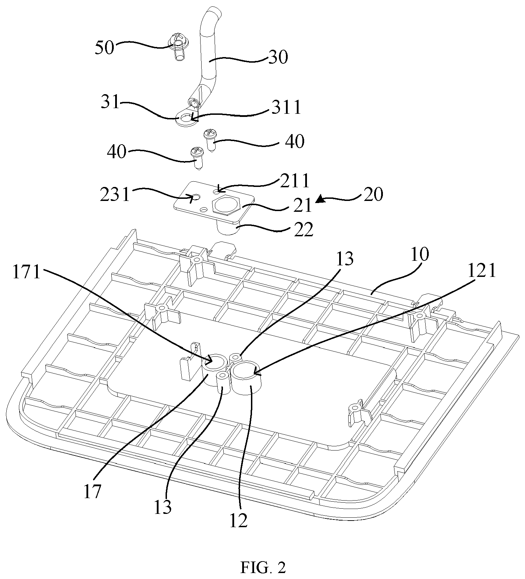

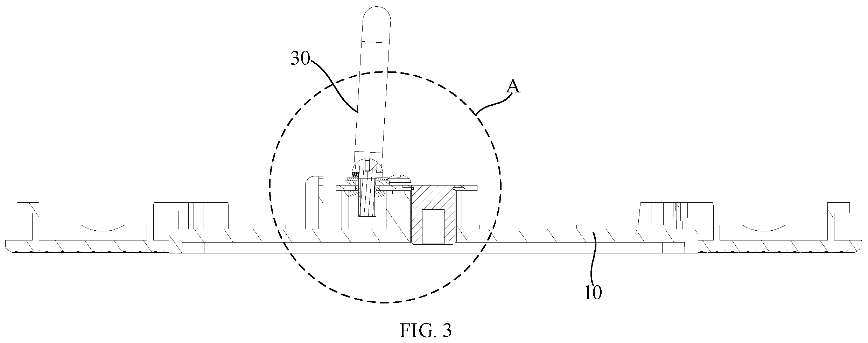

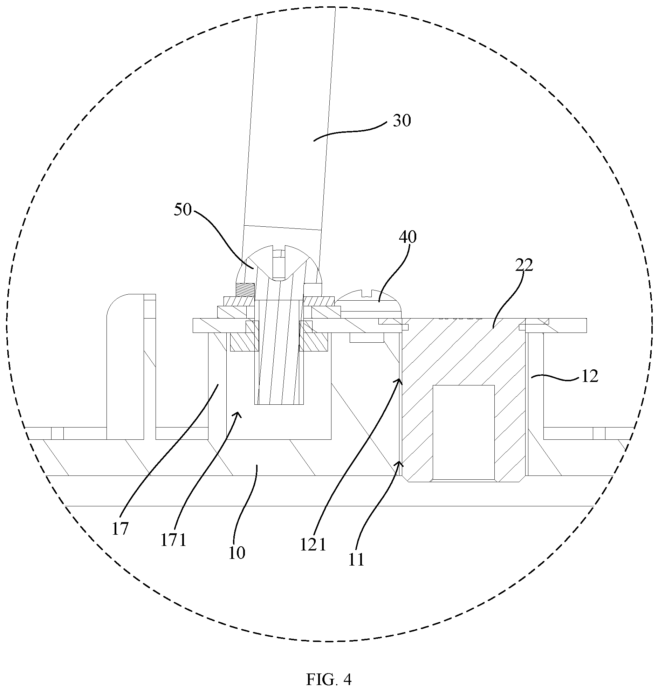

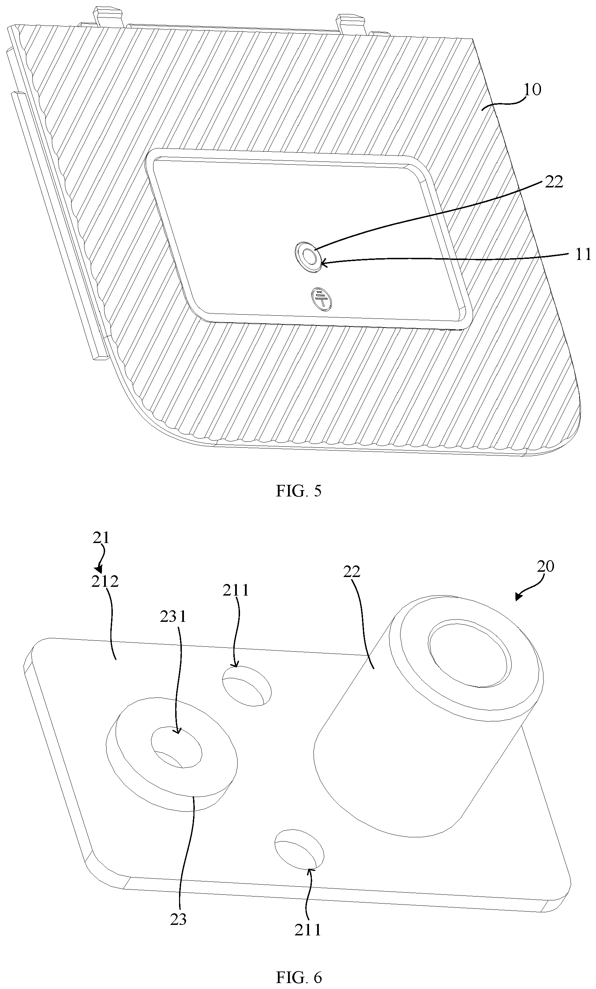

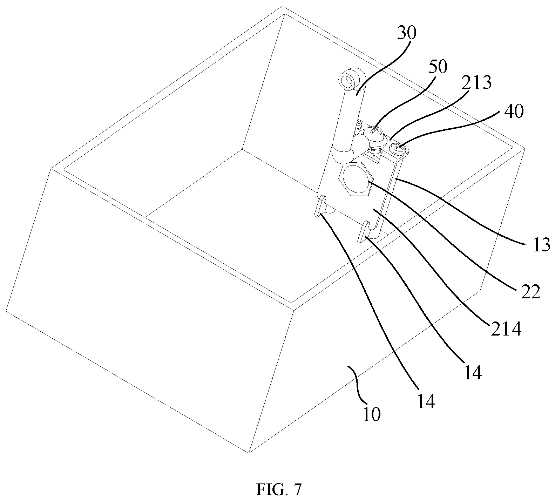

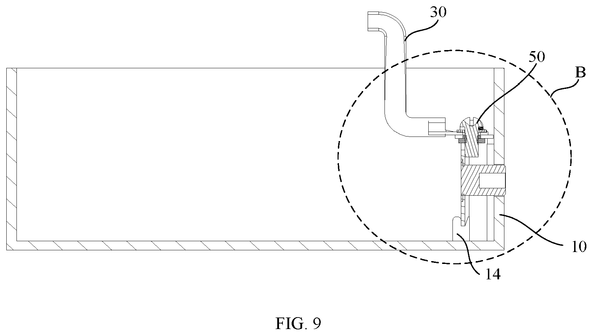

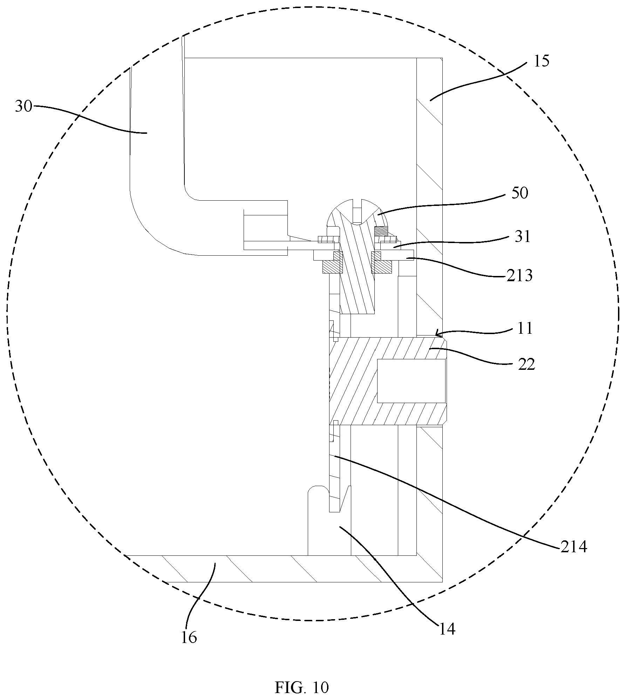

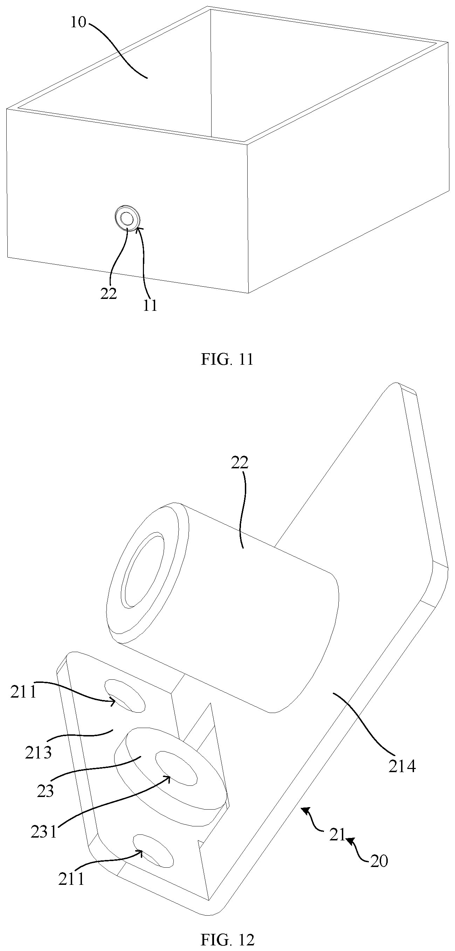

Referring to FIG. 1 to FIG. 6 or FIG. 7 to FIG. 12, FIG. 1 to FIG. 6 show relevant schematic views of a housing of an energy storage device according to an embodiment of the present application. FIG. 7 to FIG. 12 show relevant schematic views of a housing of an energy storage device according to another embodiment of the present application. An embodiment of the present application provides a housing of an energy storage device, which includes a housing body 10, a grounding adapter assembly 20, and a grounding connection member 30. The housing body 10 is provided with a through hole 11. The housing body 10 is made of non-metallic material. In addition, a shape of the housing body 10 can be flexibly adjusted and configured in various regular shapes and irregular shapes according to actual requirements, such as a cuboid or a cylinder, etc., which are not limited herein. In addition, the through hole 11, that is, a specific position on the housing body 10 where a first docking member 22 is mounted, can be flexibly adjusted and provided at any position on a bottom wall, a side wall, and a top wall of the housing body 10 according to actual requirements.

In addition, the grounding adapter assembly 20 is connected to an inner wall of the housing body 10. The grounding adapter assembly 20 includes an adapter body 21 connected to the inner wall of the housing body 10, and a first docking member 22 and a second docking member 23 both connected to the adapter body 21. The first docking member 22 is provided in the through hole 11.

In addition, the grounding connection member 30 is provided with a joint 31 connected to the second docking member 23. The grounding connection member 30 is electrically connected to a battery pack (not shown). The grounding connection member 30 may be, but not limited to, one or more combinations of a grounding wire, a conductive sheet, and a conductive strip, which can be flexibly adjusted and configured according to actual requirements.

In addition, it should be noted that the joint 31 may be a part of the grounding connection member 30, that is, the joint 31 and other parts of the grounding connection member 30 are integrally formed. The joint 31 can also be an independent member that can be separated from the other parts of the grounding connection member 30, that is, the joint 31 may be manufactured independently and then combined with the other parts of the grounding connection member 30 into a whole.

In the above-mentioned housing of the energy storage device, a grounding portion of the battery pack is electrically connected to the second docking member 23 through the grounding connection member 30, and the first docking member 22 of the grounding adapter assembly 20 is connected to a grounding network outside the housing body 10 to achieve grounding of the battery pack. During assembly, a first fastener 40 extends through the adapter body 21 and is correspondingly connected to the supporting portion 13, so that the grounding adapter assembly 20 is connected to the inner wall of the housing body 10, the first docking member 22 is provided in the through hole 11, and the first docking member 22 is connected to the grounding network. Compared with the related art in which components are processed by a lathe and are injection molded on the housing, the grounding adapter assembly 20 has a simpler structure and is convenient to produce and assemble, so that the cost is reduced, and a size of the grounding adapter assembly 20 can be made smaller, which occupies less space.

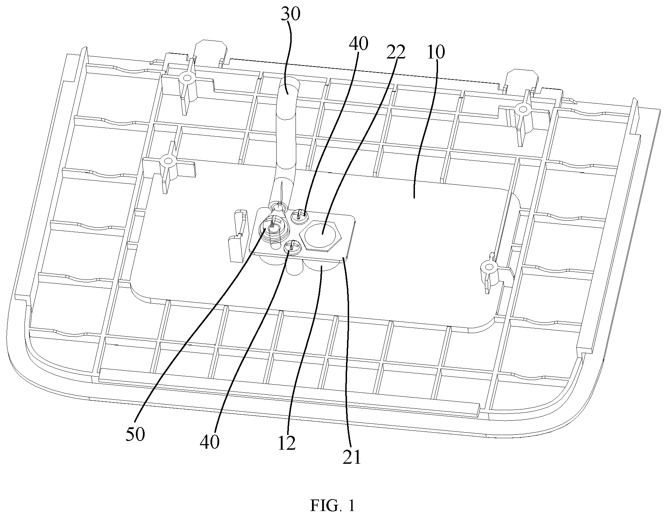

Referring to FIGS. 1 to 6, in an embodiment, the inner wall of the housing body 10 is provided with a first protrusion 12. The first protrusion 12 is provided with a first avoidance hole 121 in communication with the through hole 11. The adapter body 21 is in close contact with the first protrusion 12. The first docking member 22 is further provided in the first avoidance hole 121. In this way, when a thickness of a wall of the housing body 10 is less than a length of the first docking member 22, since the first protrusion 12 is provided on the inner wall of the housing body 10 and the first mating member 22 can be provided in the first avoidance hole 121, that is, the first avoidance hole 121 and the through hole 11 constitute a space configured to be accommodated the first docking member 22, so as to prevent the first docking member 22 from protruding out of the through hole 11. In addition, the first protrusion 12 is equivalent to increasing a thickness of a portion of the housing body 10, so that the structural strength of the housing body 10 can be improved, and the mounting stability of the adapter body 21 can be enhanced, without increasing the thickness of a wall of each region of the housing body 10, thereby reducing the cost.

It should be noted that the first protrusion 12 may be a part of the housing body 10, that is, the first protrusion 12 and other parts of the housing body 10 are integrally formed. The first protrusion 12 may also be an independent member that can be separated from the other parts of the housing body 10, that is, the first protrusion 12 may be manufactured independently and then combined with the other parts of the housing body 10 into a whole.

Referring to FIGS. 1 to 4, in an embodiment, the inner wall of the housing body 10 is further provided with at least one supporting portion 13. The housing of the energy storage device further includes at least one first fastener 40. The first fastener 40 extends through the adapter body 21 and is correspondingly connected to the supporting portion 13. In this way, on the one hand, the first fastener 40 can realize the connection and fixation of the adapter body 21 and the supporting portion 13, so that the mounting stability of the adapter body 21 on the housing body 10 can be further improved. On the other hand, the supporting portion 13 is equivalent to increasing a thickness of a portion of the housing body 10, so that the structural strength of the housing body 10 can be improved, and the mounting stability of the adapter body 21 can be further enhanced, without increasing the thickness of a wall of each region of the housing body 10, thereby reducing the cost.

It should be noted that the supporting portion 13 may be a part of the housing body 10, that is, the supporting portion 13 and other parts of the housing body 10 are integrally formed. The supporting portion 13 may also be an independent member that can be separated from the other parts of the housing body 10, that is, the supporting portion 13 may be manufactured independently and then combined with the other parts of the housing body 10 into a whole.

Referring to FIG. 1 to FIG. 4, in an embodiment, at least two supporting portions 13 are provided, at least two first fasteners 40 are provided, and each first fastener 40 is provided corresponding to each supporting portion 13. In this way, each first fastener 40 extends through the adapter body 21 and is correspondingly connected to each supporting portions 13, so that the adapter body 21 can be stably mounted the housing body 10.

Specifically, the adapter body 21 is provided with a penetration hole 211 corresponding to the first fastener 40, and the first fastener 40 is provided in the penetration hole 211.

In some embodiments, the first fastener 40 may be, but not limited to, a fastener such as a screw, a bolt, a pin, a rivet, etc. The supporting portion 13 is provided with a mounting hole corresponding to the first fastener 40, so that the first fastener 40 can be fixed to the supporting portion 13.

Referring to FIGS. 1 to 4, in this embodiment, for example two supporting portions 13 and two first fasteners 40 are provided, and there is no need to provide more, so that on the basis that the adapter body 21 is stably mounted to the housing body 10, the structure is simplified, the production and assembly are facilitated, the cost is reduced, the size of the grounding adapter assembly 20 can be be made smaller, which occupies less space.

Referring to FIGS. 1 to 4, in some embodiments, the two supporting portions 13 are symmetrically arranged with respect to a central axis of an extension direction of the adapter body 21. The extension direction is a direction from one end of the adapter body 21 pointing to the other end of the adapter body 21, and the central axis of the extension direction is a straight line that extends through a center of the adapter body 21 and is arranged along the extension direction of the adapter body 21. In this way, the adapter body 21 can be stably mounted to the housing body 10.

Referring to FIG. 1 to FIG. 6, in an embodiment, the adapter body 21 may be, but not limited to, a flat plate 212 or other irregularly shaped plate. In an embodiment, the adapter body 21 includes the flat plate 212 as an example, but is not limited hereto. The first fastener 40 and the first docking member 22 are mounted on the flat plate 212. The first fastener 40 is mounted on the flat plate 212, for example, in a direction perpendicular to a surface of the flat plate 212, so that the flat plate 212 is in close contact with the supporting portion 13. The first docking member 22 is also mounted on the flat plate 212, for example, in a direction perpendicular to the surface of the flat plate 212, and is provided in the through hole 11. In this way, the supporting portion 13 is arranged adjacent to the first protrusion 12, the overall structure is compact, and the occupied space is small.

Further, a second fastener 50 is also mounted on the flat plate 212, for example, in a direction perpendicular to the surface of the flat plate 212, so that the joint 31 is fixed to the flat plate 212 and the flat plate 212 is in close contact with a second protrusion 17. In addition, an extending direction of the first avoidance hole 121 of the first protrusion 12, an extending direction of a second avoidance hole 171 of the second protrusion 17, and an extending direction of a mounting hole of the supporting portion 13 are all perpendicular to the surface of the flat plate 212. In this way, the supporting portion 13, the first protrusion 12, and the second protrusion 17 are arranged adjacent to each other, the overall structure is compact, and the occupied space is small.

In some embodiments, the flat plate 212 and the through hole 11 may be provided at, but are not limited to, any position of the bottom wall, the side wall, and the top wall of the housing body 10, and can be flexibly adjusted and configured according to actual requirements, which is not limited herein.

Referring to FIGS. 7 to 12, a shape of the adapter body 21 shown in FIG. 7 to FIG. 12 is different from a shape of the adapter body 21 shown in FIG. 1 to FIG. 6. In an embodiment, the adapter body 21 includes a first adapter plate 213 and a second adapter plate 214 that form an angle and are connected to each other. The inner wall of the housing body 10 is further provided with at least one supporting portion 13. The housing of the energy storage device further includes at least one first fastener 40. The first adapter plate 213 abuts against the supporting portion 13, and the first fastener 40 extends through the first adapter plate 213 and is correspondingly connected to the supporting portion 13. The second adapter plate 214 abuts against the supporting portion 13 and forms a gap space with the inner wall of the housing body 10. The first docking member 22 is provided on the second adapter plate 214. In this way, the first fastener 40 extends through the first adapter plate 213 and is fixed to the supporting portion 13, and the second adapter plate 214 and the supporting portion 13 abut against each other, so that the adapter body 21 can be stably mounted on the housing body 10. In addition, the supporting portion 13 can realize that a gap space is formed between the second adapter plate 214 and the inner wall of the housing body 10, and the gap space and the through hole 11 constitute a space configured to be accommodated the first docking member 22, which can prevent the first docking member 22 from protruding out of the through hole 11 without increasing the thickness of the housing body 10.

Referring to FIGS. 7 to 10, in an embodiment, the supporting portion 13 is configured as a supporting column or a supporting block. Two supporting portions 13 are provided, and the two supporting portions 13 are located on opposite sides of the through hole 11, respectively. In this way, it is not only satisfied that the adapter body 21 is stably connected to the housing body 10, but also satisfied that the number of the supporting portions 13 is sufficiently small and the supporting portions 13 are provided in the form of support columns or support blocks, so that the structure is simplified and compact, and a size of a product can be reduced. In addition, the two supporting portions 13 are located on opposite sides of the through hole 11, that is, the two supporting portions 13 can avoid the first docking member 22, and do not interfere with the first docking member 22.

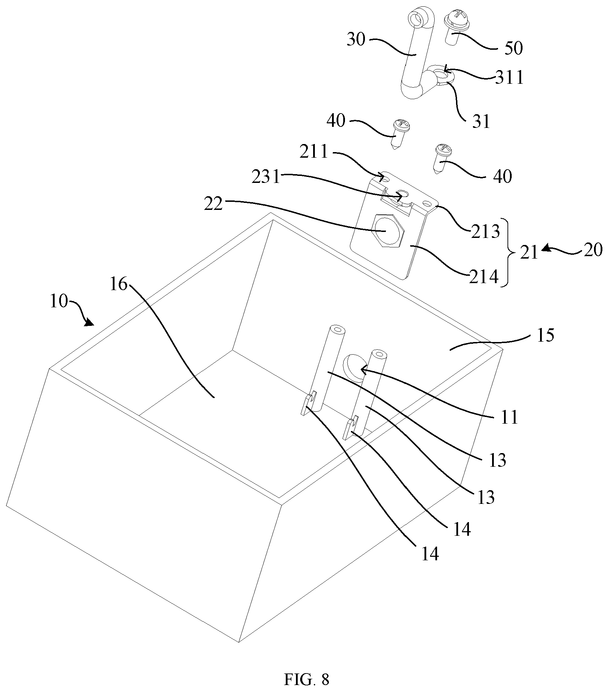

Referring to FIG. 7 and FIG. 8, in an embodiment, the supporting portion 13 and/or the inner wall of the housing body 10 is provided with an engagement portion 14, and a side portion of the second adapter plate 214 away from the first adapter plate 213 is engaged with and fixed to the engagement portion 14. In this way, since the second adapter plate 214 is engaged with and fixed to the engagement portion 14, the adapter body 21 can be stably mounted on the housing body 10.

Referring to FIGS. 7 to 12, in an embodiment, the housing body 10 includes a first housing wall 15 and a second housing wall 16 that is connected to the first housing wall 15 and forms an angle with the first housing wall 15. The through hole 11 is formed on the first housing wall 15. The supporting portion 13 is connected to the second housing wall 16. In this way, the first housing wall 15 and the second housing wall 16 are connected to form a corner of the housing body 10, that is, the grounding adapter assembly 20 is arranged at the corner of the housing body 10, so that an internal space of the housing body 10 is less occupied and the structure is compact.

The first housing wall 15 and the second housing wall 16 are respectively independently provided on adjacent two walls of the housing body 10 that form an angle, each of which may be, but not limited to a bottom wall, a side wall or a top wall of the housing body 10, and can be flexibly adjusted and arranged according to actual requirements, which is not limited herein.

Referring to FIGS. 7 to 12, in an embodiment, the first housing wall 15 is a side wall of the housing body 10. The second housing wall 16 is a bottom wall of the housing body 10. The second docking member 23 is provided on the first adapter plate 213. In this way, during the assembly operation, the first adapter plate 213 is connected to a top surface of the supporting portion 13, so that the joint 31 and the first adapter plate 213 can be fixed from top to bottom by the second fastener 50.

Referring again to FIGS. 1 to 4, in an embodiment, the first protrusion 12 is integrally formed with the housing body 10. The supporting portion 13 and the housing body 10 are integrally formed. Specifically, the first protrusion 12, the supporting portion 13, and the housing body 10 may be integrally formed by, but not limited to, injection molding or compression molding, so that the housing body 10 can be produced in mass, and the production efficiency is high.

Referring to FIGS. 1 to 4, in an embodiment, the joint 31 is provided with a first mounting hole 311, and the second docking member 23 is provided with a second mounting hole 231 corresponding to the first mounting hole 311. The housing of the energy storage device further includes a second fastener 50. The joint 31 is fixedly mounted to the second docking member 23 through the second fastener 50 extending through the first mounting hole 311 and the second mounting hole 231 sequentially.

In some embodiments, the second fastener 50 may be, but not limited to, a screw, a bolt, a pin, a rivet, etc. The second mounting hole 231 provided on the second docking member 23 corresponds to the second fastener 50, so that the second fastener 50 can be fixed to the second docking member 23.

Referring again to FIGS. 1 to 4, in an embodiment, the inner wall of the housing body 10 is provided with the second protrusion 17. The second protrusion 17 is provided with a second avoidance hole 171 corresponding to the second docking member 23. The adapter body 21 is in close contact with the second protrusion 17, and the second docking member 23 is further provided in the second avoidance hole 171. In this way, since the second protrusion 17 is provided on the inner wall of the housing body 10, the second fastener 50 can be provided in the second avoidance hole 171 for avoidance. In addition, the second protrusion 17 is equivalent to increasing a thickness of a portion of the housing body 10, so that the structural strength of the housing body 10 can be improved, and the mounting stability of the adapter body 21 can be enhanced, without increasing a wall of each region of the housing body 10, thereby reducing the cost.

It should be noted that the second protrusion 17 may be a part of the housing body 10, that is, the second protrusion 17 and other parts of the housing body 10 are integrally formed. The second protrusion 17 may also be an independent member that can be separated from the other parts of the housing body 10, that is, the second protrusion 17 may be manufactured independently and then combined with the other parts of the housing body 10.

In an embodiment, the first docking member 22 may be fixed to the adapter body 21 in various ways including but not limited to riveting, welding, adhesive, snap-fitting or threaded connection. In addition, the second docking member 23 may be fixed to the adapter body 21 in various ways including but not limited to riveting, welding, adhesive, snap-fitting or threaded connection.

In this embodiment, the first docking member 22 and the second docking member 23 are respectively fixed to the adapter body 21 by, for example, riveting, so that the first docking member 22 and the second docking member 23 can be quickly mounted and fixed to the adapter body 21, and the stability of the first docking member 22 and the second docking member 23 on the adapter body 21 is better than that of other mounting manners.

In some embodiments, the first docking member 22 may be, but not limited to, a nut, a binding post, a clip, a clamping member, etc., which can be easily connected to the grounding wire and electrically connected to the grounding network through the grounding wire.

Referring to FIGS. 1 to 6, in an embodiment, an energy storage device is provided, which includes the housing of the energy storage device according to any one of the above embodiments, and further includes a battery pack provided in the housing, and a grounding portion of the battery pack is electrically connected to the grounding connection member 30.

In the above-mentioned energy storage device, the grounding portion of the battery pack is electrically connected to the second docking member 23 through the grounding connection member 30, and the first docking member 22 of the grounding adapter assembly 20 is connected to the grounding network outside the housing body 10 to achieve grounding of the battery pack. During assembly, the grounding adapter assembly 20 is connected to the inner wall of the housing body 10, the first docking member 22 is provided in the through hole 11, and the first docking member 22 is connected to the grounding network. Compared with the related art in which components are processed by a lathe and are injection molded on the housing, the grounding adapter assembly 20 has a simpler structure and is convenient to produce and assemble, so that the cost is reduced, and a size of the grounding adapter assembly 20 can be made smaller, which occupies less space.

In the description of the present application, it should be understood that the terms center", longitudinal", transverse", length", width", thickness", upper", lower", front", rear", left", right", vertical", horizontal", top", bottom", inner", outer", clockwise", counterclockwise", axial", radial", circumferential direction are based on the azimuths or position relationships shown in the attached drawings. These terms are only for the convenience of describing the present application and simplifying the description, rather than indicating or implying that the indicated devices or elements must have the specific azimuths, or be constructed or operated in the specific azimuths, and therefore such terms cannot be understood as limitations of the present application.

In addition, the terms first and second are only used for descriptive purposes and cannot be understood as indicating or implying relative importance or implicitly indicating the number of indicated technical features. Thus, the features defined with first and second may explicitly or implicitly include at least one of the features. In the description of the present application, a plurality of means at least two, such as two, three, etc., unless otherwise expressly and specifically defined.

In the present application, unless otherwise expressly specified and limited, the terms mount", connect", couple", fix and the like should be interpreted broadly. For example, the terms can mean fixed connection, detachable connection, or being integrated. The terms can mean mechanical connection or electrical connection. The terms can mean directly connection or indirectly connection through an intermediate medium. The terms can mean connection within two elements or interaction relationship between two elements, unless otherwise expressly limited. For those skilled in the art, the specific meaning of the above terms in the present application should be understood according to the specific situation.

In the present application, unless otherwise expressly specified and limited, a first feature above or below a second feature may be in direct contact with the second feature, or the first and second features may be in indirect contact through an intermediate medium. Moreover, the first feature above the second feature may be right above or obliquely above the second feature, or the first feature may be merely located at a height higher than the second feature. The first feature below the second feature may be right below or obliquely below the second feature, or the first feature may be merely located at a height lower than that of the second feature.

It should be noted that when an element is called fixed to or mounted on another element, it can be directly on another element or there can be an intermediate element. When an element is considered to be connected to another element, it can be directly connected to another element or there can be an intermediate element. The terms vertical", horizontal", up", down", left", right and similar expressions used herein are for the purpose of illustration only and do not represent the only ways for implementation.

The above-mentioned embodiments do not constitute a limitation on the protection scope of the technical solution. Any modifications, equivalent replacements and improvements made within the spirit and principles of the above-mentioned embodiments shall be included within the protection scope of this technical solution.

The foregoing descriptions are merely specific embodiments of the present application, but are not intended to limit the protection scope of the present application. Any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A housing of an energy storage device, the housing comprising:
a housing body provided with a through hole, wherein an inner wall of the housing body is provided with at least one supporting portion, and the supporting portion and the housing body are integrally formed;
a grounding adapter assembly fixedly connected to the inner wall of the housing body, wherein the grounding adapter assembly comprises an adapter body connected to the inner wall of the housing body, and a first docking member and a second docking member that are connected to the adapter body, the first docking member is provided in the through hole and does not extend out of the housing body through the through hole;
at least one first fastener, wherein the first fastener extends through the adapter body and is correspondingly connected to the supporting portion, the adapter body comprises a first adapter plate and a second adapter plate that form an angle and are connected to each other, the first adapter plate abuts against the supporting portion, the first fastener extends through the first adapter plate and is correspondingly connected to the supporting portion, the second adapter plate abuts against the supporting portion and forms a gap space with the inner wall of the housing body, and the first docking member is provided on the second adapter plate; and
a grounding connection member and a second fastener, wherein the grounding connection member is provided with a joint connected to the second docking member, the grounding connection member is configured to be electrically connected to a grounding portion of a battery pack, and the first docking member is configured to be connected to a grounding network outside the housing body to achieve grounding of the battery pack; the joint is provided with a first mounting hole, the second docking member is provided with a second mounting hole corresponding to the first mounting hole, and the joint is fixedly mounted on the second docking member through the second fastener extending through the first mounting hole and the second mounting hole sequentially.

2. The housing of the energy storage device according to claim 1, wherein the housing body is in a shape of a cuboid or a cylinder.

3. The housing of the energy storage device according to claim 1, wherein at least two supporting portions are provided, at least two first fasteners are provided, and each first fastener is provided corresponding to each supporting portion.

4. The housing of the energy storage device according to claim 1, wherein the adapter body is provided with a penetration hole corresponding to the first fastener, and the first fastener is provided in the penetration hole.

5. The housing of the energy storage device according to claim 1, wherein the supporting portion is configured as a supporting column or a supporting block, two supporting portions are provided, and the two supporting portions are located on opposite sides of the through hole, respectively.

6. The housing of the energy storage device according to claim 1, wherein the supporting portion and/or the inner wall of the housing body is provided with an engagement portion, and a side portion of the second adapter plate away from the first adapter plate is engaged with and fixed to the engagement portion.

7. The housing of the energy storage device according to claim 1, wherein the housing body comprises a first housing wall, and a second housing wall connected to the first housing wall and forming an angle with the first housing wall, the through hole is formed on the first housing wall, and the supporting portion is connected to the second housing wall.

8. The housing of the energy storage device according to claim 7, wherein the first housing wall is a side wall of the housing body, the second housing wall is a bottom wall of the housing body, and the second docking member is provided on the first adapter plate.

9. The housing of the energy storage device according to any one of claims 1 to 8, wherein the first docking member and the second docking member are respectively fixed to the adapter body by riveting.

10. An energy storage device, comprising the housing of the energy storage device according to any one of claims 1 to 9, and a battery pack, wherein the battery pack is provided in the housing, and a grounding portion of the battery pack is electrically connected to the grounding connection member.
